# EUROPÄISCHE PATENTSCHRIFT

(11) **EP 1 685 754 B1**
(45) Veröffentlichungstag und Bekanntmachung des Hinweises auf die Patenterteilung: **28.07.2010**
(21) Anmeldenummer: 06002038.5
(22) Anmeldetag: 01.02.2006
(51) Int. Cl.: A01C 15/02, A01C 15/12, A01C 7/02, A01C 7/16, A01C 15/16, E01C 19/20

(54) **Streugerät**
Spreading device
Dispositif d'épandage

(30) Priorität: 01.02.2005 DE 102005005521
(43) Veröffentlichungstag der Anmeldung: 02.08.2006
(73) Patentinhaber: GARDENA Manufacturing GmbH, 89079 Ulm (DE)
(72) Erfinder: Claus, Ralf, 89134 Blaustein (DE)

(56) Entgegenhaltungen:
- DE-A1- 19 953 234
- DE-U1- 8 422 230
- GB-A- 2 067 381
- US-A- 2 728 492
- US-A- 2 779 507

## Beschreibung

Die Erfindung betrifft ein Streugerät mit einem Behälter für das Streugut, der in seinem unteren Bereich mit einem Schlitz als Auslass zur Streugutabgabe, oberhalb dieses Schlitzes mit einer drehbaren Welle mit einer parallel zum Schlitz verlaufenden Achse, sowie mit radial abragenden Rippen oder dergleichen und unter dem Schlitz mit einer Klappe zur Einstellung der Abgabemenge versehen ist, wobei die Behälterwand im Bereich der Anslassöffnungen den von den rotierenden Wellenteilen gebildeten Zylinderraum umschließt.

GB-A-2 067 381 offenbart ein Streugerät dieser Art.

Ein Streugerät ist aus dem DE-U 8 422 230 bekannt. Der dort vorgesehene Streugutbehälter ist Teil eines Streuwagens, der mit zwei Rädern und einem Handbügel versehen ist, mit dessen Hilfe er über Böden geschoben werden kann, die mit dem Streugut versehen werden sollen. Die Achse der beiden Räder, die am Behälter gelagert ist, bildet gleichzeitig die drehbare Welle, die dort mit vier im gleichen Abstand zueinander um die Achse angeordneten Rippen versehen ist. Diese sternförmig ausgebildete Welle liegt im Abstand vor mehreren, im unteren Behälterbereich vorgesehenen und in einer Reihe angeordneten Öffnungen, die durch einen darunter liegenden, in Richtung der Achse der Welle bewegbaren Schieber zur Einstellung der Streugutabgabemenge mehr oder weniger verschließbar sind.

Bei Streugeräten dieser Art lässt es sich nicht vermeiden, dass insbesondere feinkörniges Streugut auch dann an der Welle vorbei nach unten austritt, wenn der Streuwagen nicht bewegt wird. Es besteht auch die Gefahr, dass die Welle dann, wenn grobkörniges Streugut ausgebracht werden soll, verklemmt.

Das gilt im Wesentlichen auch für andere Bauarten sogenannter Kastenstreuer, wie sie beispielsweise aus der DE 199 53 234 A1 bekannt sind. Dort hat man die Enden von vier sternförmig von der Welle abstehenden Rippen mit Rührorganen aus elastischem Kunststoff versehen, welche die Austrittsöffnungen überstreichen. Für unterschiedliches Streugut, wie zum Beispiel Splitt oder Kalk und Grassamen, das eine stark unterschiedliche Korngröße aufweist, lassen sich solche Kastenstreuer aber auch nicht einsetzen, weil entweder feinkörniges Streugut nach unten durchrieselt, auch wenn das Streugerät nicht bewegt wird, oder die Welle bei Einsatz für grobkörniges Streugut verklemmt.

Der Erfindung liegt daher die Aufgabe zugrunde, ein Streugerät der eingangs erwähnten Art zu verbessern und es so auszubilden, dass einerseits das unbeabsichtigte Durchrieseln von Streugut vermieden wird und andererseits ein Verklemmen der Welle auch beim Einsatz zum Ausbringen von Streugut mit stark unterschiedlicher Korngröße, also zum Beispiel beim Einsatz zum Ausbringen von Kalk oder Grassamen einerseits, oder zu Ausbringen von Splitt andererseits, sicher ausgeschlossen werden kann.

Zu diesem Zweck wird bei einem Streugerät der eingangs genannten Art vorgesehen, dass eine Längskante des Schlitzes mit sich in Drehrichtung der Welle erweiternden Öffnungen, versehen ist. Durch diese Ausgestaltung wird es möglich, die drehbare Welle als eine Art Drehverschluss für das abzugebende Streugut auszubilden, was insbesondere dann vorteilhaft gelingt, wenn die Rippen oder dergleichen, gleichmäßig über den Umfang der Welle verteilt sind und ihre Anzahl so gewählt ist, dass immer mindestens eine Rippe oder dergleichen an den zu beiden Seiten des Schlitzes liegenden Behälterwänden anliegt.

Besonders vorteilhaft ist es dabei, wenn die Behälterwand den von den rotierenden Wellenteilen gebildeten Zylinderraum zumindest über einen Winkelbereich von 90° umschließt.

Durch diese Ausgestaltung wird auch die Anordnung einer Alublende vor den Austrittsöffnungen, wie das bei bekannten Bauarten der Fall ist, überflüssig, und es ist ein einfaches Befüllen und Entleeren des Behälters möglich.

Die sich in Drehrichtung der Welle erweiternden Öffnungen am Behälter werden in besonders vorteilhafter und einfacher Weise als Zwischenräume einer Reihe von Zähnen ausgebildet.

In weiterer vorteilhafter Ausgestaltung der Erfindung, kann die Klappe um die Achse der Welle schwenkbar und der Außenkontur des Behälters im Bereich des Schlitzes angepasst sein. Die Klappe kann an ihrem dem Schlitz in der geschlossenen Stellung überdeckenden Ende außerdem vorteilhaft mit einer elastischen Lippe versehen werden, die unter Vorspannung an der Behälterwand anliegt. Diese Ausgestaltung ermöglicht eine relativ einfache und störungsfreie Verstellung der auszubringenden Menge, die wegen der Anordnung der Verzahnung auch sehr gering eingestellt werden kann.

In weiterer Ausgestaltung der Erfindung ist vorgesehen, dass die Klappe einen im Wesentlichen formstabilen, schwenkbeweglich angelenkten Endbereich aufweist. Mit dem formstabilen Endbereich kann ein sicherer Verschluss des Schlitzes gewährleistet werden, sofern kein Streugut ausgebracht werden soll, beispielsweise im Stillstand des Streugeräts. Bei einer Bewegung des Streugeräts, bei der auch Streugut ausgebracht werden soll, schwenkt der im Wesentlichen formstabile Endbereich der Klappe bedingt durch die Bewegung der Rippen im Behälter und den dadurch hervorgerufenen Druck auf das Streugut um ein Schwenkgelenk aus einer Verschlussposition in eine Öffnungsposition und ermöglicht somit eine Abgabe von Streugut auf den Untergrund. Bei einer bevorzugten Ausführungsform der Erfindung ist der im Wesentlichen formstabile Endbereich mittels eines Filmscharniers an der Klappe angelenkt. Ein Filmscharnier kann vorzugsweise im Kunststoffspritzgussverfahren verwirklicht werden und stellt einen linienförmigen, mit geringen Betätigungskräften elastisch deformierbaren Schwächungsbereich zwischen der Klappe und dem einstückig daran angebrachten Endbereich dar.

In Weitererbildung der Erfindung, können die Außenränder, also die radial am weitesten außen verlaufenden Kanten der Rippen, in Richtung der Achse der Welle gleichen Abstand von dieser aufweisen, oder auch zu den Wellenenden hin näher zur Achse liegen. Im letzteren Fall, insbesondere wenn die Außenränder der Rippen symmetrisch zur Mitte der Welle gebogen sind, wird es möglich, die auszubringende Streugutmenge zu beiden Enden der Welle hin geringer als in der Mitte zu halten. Bei einer solchen Ausgestaltung müssen natürlich die Behälterwände, die von den Außenrändern der Rippe überstrichen werden, entsprechend bombiert sein, dann erst wird es möglich, die Streumenge zu den Rändern hin zu verringern, was wiederum zur Folge hat, dass beim anschließenden Abfahren einer weiteren Streubahn die aneinandergrenzenden Bereiche überlappt werden können, ohne dass dort die doppelte Streumenge ausgebracht wird.

In besonders vorteilhafter Weise können die Rippen der drehbaren Welle oder zumindest deren radial äußere Bereiche elastisch nachgiebig ausgebildet sein und an der Behälterwand anliegen. Diese Ausgestaltung erlaubt eine gewisse Nachgiebigkeit der Rippen, die ein Verklemmen der Welle insbesondere wegen der sich auch in der Drehrichtung der Welle erweiternden Zwischenräume der Zähne sicher verhindert.

Eine besonders vorteilhafte und einfache Ausführung ergibt sich, wenn die Welle aus einem drehfest mit Rädern verbundenem Trägerrohr besteht, das am Behälter gelagert ist und mit den Rippen bestückt ist.

In weiterer Ausgestaltung der Erfindung ist vorgesehen, dass die Zähne an der Längskante des Schlitzes einen Zahnwinkel von zumindest 30 Grad, bevorzugt von 45 Grad, besonders bevorzugt von maximal 60 Grad, aufweisen. Durch die Ausführung der Zähne mit einem derartigen Zahnwinkel kann eine besonders feine Dosierbarkeit für das Streugut verwirklicht werden. Eine Verschiebung oder Verschwenkung der Klappe längs eines Verstellweges zwischen einer Schließstellung und einer Öffnungsstellung führt bedingt durch den Zahnwinkel von minimal 30 Grad und maximal 60 Grad zu einer einfach beeinflussbaren Veränderung eines von der Klappe freigegebenen Öffnungsquerschnitts. Durch den rechteckigen Querschnitt des Schlitzes, der sich an die von den Zähnen begrenzten Öffnungen anschließt, kann auch für grobkörnige Substrate ein großer Öffnungsquerschnitt verwirklicht werden, so dass eine universelle Anwendbarkeit des Streugeräts für unterschiedliche Streugüter mit unterschiedlichster Körnung bzw. Korngröße verwirklicht ist.

In weiterer Ausgestaltung der Erfindung ist vorgesehen, dass die Zähne an der Längskante des Schlitzes mit einer Zahnfußbreite gestaltet sind, die zumindest einem 0,6-fachen, insbesondere zumindest einem 0,75-fachen, einer Zahnteilung entspricht. Die Zahnfußbreite ist das Längenmaß, das der Zahn an seiner breitesten Stelle an der Längskante des Schlitzes einnimmt. Die Zahnteilung ist der Abstand zwischen Mittelachsen zweier benachbarter Zähne. Durch die Wahl einer Zahnfußbreite, die zumindest dem 0,6-fachen der Zahnteilung entspricht, kann insbesondere für feinkörnige Streugüter eine vorteilhafte Feineinstellung der Dosierung des Streuguts gewährleistet werden.

In weiterer Ausgestaltung der Erfindung ist vorgesehen, dass die Welle als Trägerrohr ausgeführt ist, das am Behälter gelagert und mit Rippen bestückt ist, und dass eine drehbewegliche Ankopplung der Welle an Rädern mittels einer Freilaufeinrichtung vorgesehen ist. Damit liegt eine drehrichtungsabhängige Bewegungskopplung zwischen den Rädern des Streugeräts und der für die Dosierung des Streuguts vorgesehenen, am Trägerrohr angebrachten, Rippen vor. Während in einer ersten Drehrichtung der Räder, die vorzugsweise einer Vorwärtsbewegung des Streugeräts entspricht, eine zumindest im Wesentlichen starre Kopplung zwischen den Rädern und dem Trägerrohr vorliegt, so dass eine Dosierung von Streugut stattfinden kann, ist bei einer zweiten Drehrichtung der Räder, die vorzugsweise einer Rückwärtsbewegung des Streugeräts entspricht, eine Entkopplung zwischen Rädern und Trägerrohr vorgesehen, so dass auch keine Streugutdosierung erfolgt. Ein derartiger Freilauf für eine drehrichtungsabhängige Ankopplung des Trägerrohrs an die Räder kann beispielsweise mittels einer Sperrklinkeneinrichtung verwirklicht werden. Der Freilauf erlaubt eine Bewegung des Streugeräts ohne die Dosierung von Streugut, indem das Streugerät in der Rückwärtsrichtung bewegt wird. Dabei wird keine Bewegung von den Rädern auf das Trägerrohr und die Rippen übertragen. Wird das Streugerät hingegen in die Vorwärtsrichtung bewegt, liegt eine Kopplung zwischen den Rädern und dem Trägerrohr vor, so dass eine Streugutdosierung erfolgt. Damit kann ein Benutzer in einfacher Weise darüber bestimmen, ob eine Bewegung des Streugeräts zu einer Streugutdosierung führt oder nicht. Außerdem wird bei Reversierbewegungen, also einer Abfolge einer Vorwärts- und einer Rückwärtsbewegung, wie sie beispielsweise beim Einfahren des Streugeräts in eine Nische erfolgt, eine Doppelstreuung vermieden, da das Streugerät lediglich bei der Vorwärtsbewegung Streugut abgibt, während bei der Rückwärtsbewegung keine Streugutabgabe vorgesehen ist. Insbesondere beim Vorliegen einer Vielzahl von zu streuenden Nischen bedeutet ein Freilauf eine erhebliche Vereinfachung der Handhabung des Streugeräts und eine Verbesserung des Streuergebnisses, da eine Doppeldosierung auf vorwärts und rückwärts vom Streugerät überfahrene Bereiche vermieden wird. Ein wiederkehrendes Öffnen und Schließen der Klappe und eine damit möglicherweise unerwünschte Veränderung der Dosierungseinstellung, wie bei einem Streugerät ohne Freilauf zur Vermeidung von Doppeldosierungen erforderlich, kann vermieden werden. Zudem wird insbesondere bei grobkörnigem Streugut ein Verklemmen des Streuguts in den Öffnungen des Schlitzes, insbesondere zwischen den keilförmig zulaufenden Zähnen, vermieden, da die Rippen die Öffnungen nur in einer Bewegungsrichtung überstreichen, in der sich die Öffnungen aufweiten.

In weiterer Ausgestaltung der Erfindung ist vorgesehen, dass der von den rotierenden Wellenteilen gebildeten Zylinderraum im Bereich der Auslassöffnungen exzentrisch zur Behälterwand angeordnet ist. Der Behälterraum im Bereich der Auslassöffnungen kann in der Art eines Abschnitts einer Zylinderhülse geformt sein. Eine von einer Kreisform abweichende Geometrie des Behälters in diesem Bereich ist ebenfalls denkbar. Durch eine exzentrische Anordnung des von den rotierenden Wellenteilen gebildeten Zylinderraums gegenüber der Behälterwand liegt ein ungleichmäßiger radialer Abstand zwischen der Achse der Welle und der Behälterwand vor. Dadurch werden die an der Welle angebrachten Rippen bei ihrer umlaufenden Bewegung um die Welle durch den Kontakt mit der Behälterwand unterschiedlich stark elastisch deformiert und ermöglichen somit eine besonders vorteilhafte Förderwirkung für das Streugut. Die vorteilhafte Förderwirkung kann insbesondere dann erzielt werden, wenn die Rippen beim Einlaufen an die beispielsweise kreisförmig geformte Behälterwand zunächst stark deformiert werden und bei der weiteren Rotationsbewegung um die Achse bedingt durch die Exzentrizität eine Abnahme der Deformation vorliegt.

Die Erfindung ist anhand mehrerer Ausführungsbeispiele schematisch in den Zeichnungen dargestellt und wird im folgenden erläutert. Es zeigen:
- Fig. 1: einen Querschnitt durch das Streugerät nach der Erfindung längs der Achse der drehbaren Welle geschnitten,
- Fig. 2: den schematischen Schnitt durch den Behälter des Streugerätes der Fig. 1 in Richtung der Linie II-II der Fig. 1 gesehen,
- Fig. 3: die Ansicht des Streugerätes nach den Fig. 1 und 2 von unten,
- Fig. 4: eine schematische Darstellung einer weiteren Ausführungsform eines Streugeräts mit einem modifizierten Schlitz in einer Ansicht von unten,
- Fig. 5: eine schematische Schnittdarstellung einer weiteren Ausführungsform eines Streugeräts mit einer schwenkbeweglich angelenkten Klappe in einer Ruhestellung,
- Fig. 6: eine schematische Schnittdarstellung des Streugeräts gemäß der Fig. 6 mit schwenkbeweglich angelenkter Klappe in einer Funktionsstellung.

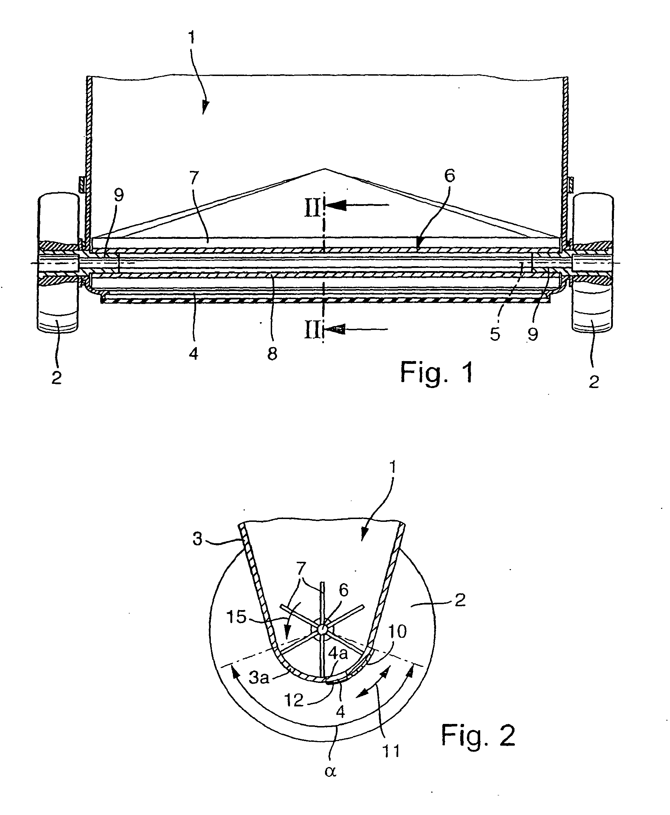

In der Fig. 1 ist der untere Teil eines Behälters 1 zu erkennen, der Teil eines Streuwagens ist, welcher mit Hilfe der beiden Räder 2 über eine Oberfläche hinweg bewegbar ist, die mit einem Streumittel, zum Beispiel. Dünger, Samen oder auch Splitt versehen werden soll. Der Behälter 1 ist zu diesem Zweck in seinem unteren Bereich mit konvergierenden Behälterwänden 3 versehen, die auf diese Weise einen sich nach unten verengenden Trichter bilden, der unten, wie insbesondere aus Fig. 2 hervorgeht, einen über die gesamte Behälterbreite durchgehenden Schlitz 4 aufweist. Der Schlitz 4 erstreckt sich dabei parallel zu der Achse 5 einer Welle 6, die mit radial nach außen abragenden Rippen 7 versehen ist. Die Welle 6 besteht dabei aus einem Trägerrohr 8, das an seinen beiden Enden drehfest auf Stutzen 9 der Räder 2 aufgesteckt und mit Hilfe dieser Stutzen 9 am Behälter 1 gelagert ist.

Beim Ausführungsbeispiel sind sechs, im gleichen Abstand zueinander, auf dem Umfang der Welle 6 verteilte Rippen 7 vorgesehen. Die rotierenden Teile der Welle 6, d.h. also die äußeren Enden der Rippen 7, bilden bei ihrer Rotation einen zylindrischen Raum, der sich, wie sich aus Fig. 2 ergibt, beim Ausführungsbeispiel über einen Winkel α von etwa 135° mit der Wandung 3a des Behälters **1** deckt, die in diesem unteren Bereich, der auch den Schlitz 4 aufweist, daher die rotierende Welle 6 eng umschließt, wobei diese mit den Enden ihrer Rippen 7 an der Innenwandung des Behälterbereiches 3a anliegt. Die Rippen 7 selbst oder deren äußerste Enden, können zu diesem Zweck elastisch nachgiebig ausgebildet sein und an der Behälterwand 3a anliegen.

Die Anzahl der Rippen 7 ist so gewählt, dass immer je eine Rippe an dem Behälterwandbereich 3a auf beiden Seiten des Schlitzes 4 anliegt. Ein unbeabsichtigtes Durchrieseln von Streumaterial wird somit sicher verhindert. Die Rippen 7 sind beim gezeigten Ausführungsbeispiel achsparallel angeordnet, anstelle von sechs Rippen könnten auch nur fünf Rippen vorgesehen werden oder mehr, wenn jeweils dafür gesorgt ist, dass je eine der Rippen zu beiden Seiten des Schlitzes 4 an der Behälterwandung 3a anliegt. Auch der Winkel α kann kleiner als beim Ausführungsbeispiel gewählt werden, beispielsweise mit nur 90° oder auch größer, wenn dies im Hinblick auf die Anzahl der Rippen 7, von denen je eine an der Behälterwand 3a zu beiden Seiten des Schlitzes 4 anliegen soll, zweckmäßig erscheint.

Der Schlitz 4 ist an seiner in Drehrichtung 15 der Welle 6 vorderen Längskante 4a mit einer Reihe von Zähnen 13 versehen, die schräg zur Achse 5 verlaufende seitliche Flanken aufweisen, welche wiederum Zwischenräume 14 zwischen benachbarten Zähnen 13 ergeben, die sich in der Drehrichtung 15 der Welle 6 keilförmig erweitern.

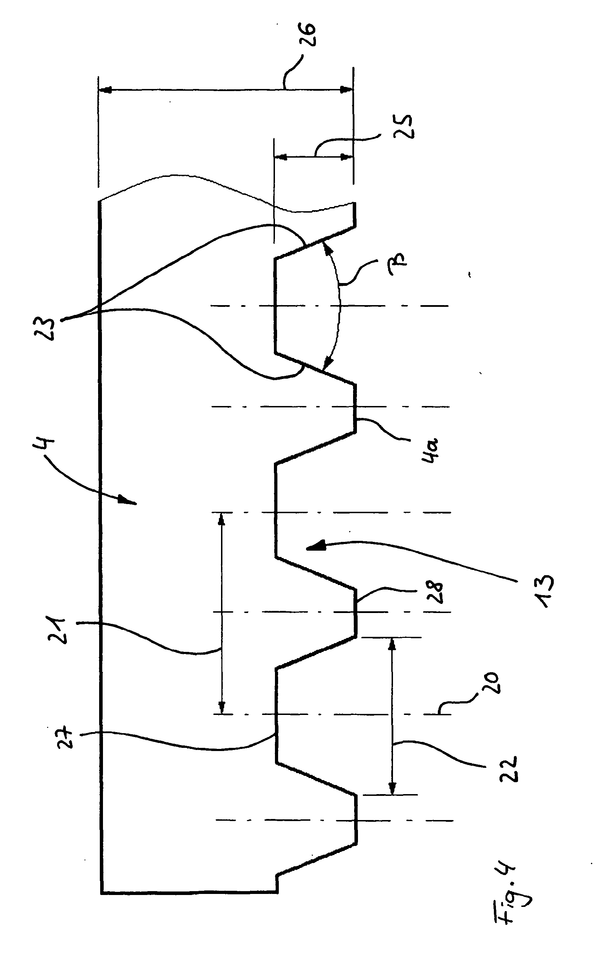

Ausgehend von der zahnförmig gestalteten Längskante 4a erstreckt sich der in der Fig. 4 detailliert dargestellte Schlitz 4 über eine Schlitzbreite 26, die auch einen Durchtritt von grobkörnigem Streumaterial erlaubt. Der Schlitz 4 ist als eine im Wesentlichen rechteckige Öffnung ausgeführt, an deren einer Längskante 4a die Verzahnung vorgesehen ist. Die Zähne 13 ragen in die Öffnung hinein, wobei die Schlitzbreite 26 zumindest der doppelten Zahnhöhe 25 der Zähne 13 entspricht. Damit kann das Streumaterial eine Korngröße aufweisen, die größer als die von den Zähnen 13 berandeten Öffnungen ist, womit ein universeller Einsatz des Streuwagens für unterschiedlichste Streumaterialien sichergestellt ist. Die Zahnflanken **23** der Zaähne **13** schließen einen Winkel β ein, der kleiner als 60 Grad gewählt ist, um eine vorteilhafte Einstellbarkeit der durch den Schlitz 4 zu dosierenden Streumittelmenge anhand der in Fig. 4 nicht dargestellten Klappe 10 vornehmen zu können.

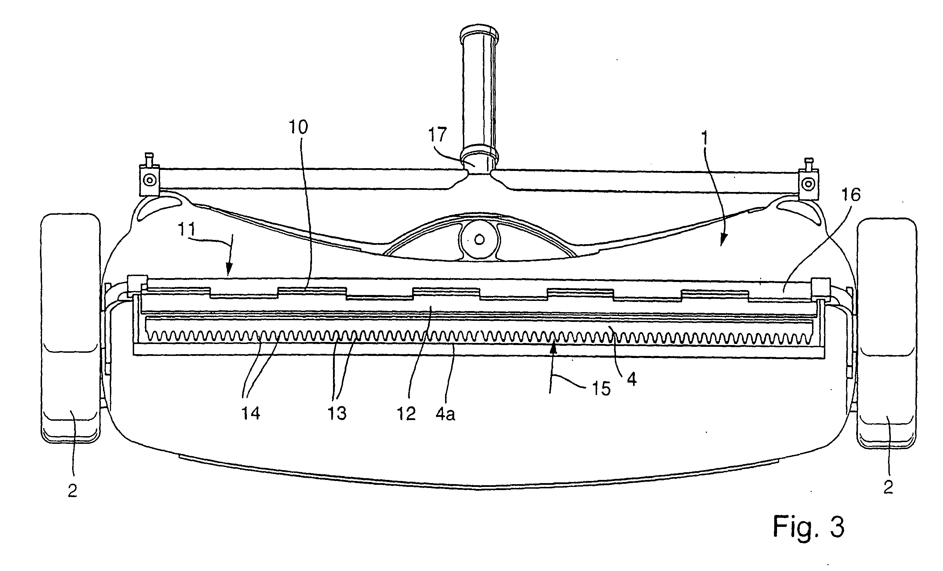

Bei der schematischen Darstellung gemäß der Fig. 4 ist abweichend von der Ausführungsform der Fig. 3 eine Zahnfußbreite 22 der Zähne 13 vorgesehen, die zumindest dem 0,6-fachen der Zahnteilung 21 entspricht. Die Zahnteilung 21 kann durch den Abstand zweier Symmetrieachsen 20 benachbarter Zähne 13 beschrieben werden. Die Zahnfußbreite wird durch den Abstand 22 der Flanken 23 der von der Längskante 4a abragenden Zähne 13 im Bereich der Längskante 4a bestimmt. Durch eine Zahnfußbreite 22, die zumindest das 0,6-fache der Zahnteilung 21 beträgt, weisen die trapezförmig gestalteten Zähne 13 gemäß der Fig 4 eine in den Schlitz 4 gerichtete Oberkante 27 auf, die erheblich länger als eine koaxial zur Längskante 4a liegende Unterkante 28 ist. Eine freie Breite des Schlitzes 4, die sich als Differenz der Schlitzbreite 26 und der Zahnhöhe 25 ergibt, kann bei einem bevorzugten Ausführungsbeispiel der Erfindung 12mm bis 20mm betragen.

Die Menge des auszubringenden Streumaterials wird durch die Stellung einer gebogenen schwenkbaren Klappe 10 bestimmt die -wie Fig. 2 zeigt- in ihrer Krümmung der Krümmung des Behälterwandbereiches 3a angepasst ist und sich um die Achse 5 der Welle 6 verschwenken lässt. Die Klappe 10 ist dabei mit einem aus Fig. 3 ersichtlichen Bügel 16 versehen, der an seinen beiden Enden im Bereich der Räder an der Welle 6 gelagert ist. Die Verschwenkung kann mit einem üblichen Gestänge erfolgen, das beispielsweise seitlich an der Lagerung, d. h. am Bügel 16 der Klappe 10 angreift und von einer Person betätigbar ist, die den Behälter 1 mit Hilfe eines Handbügels oder auch einer Stange 17 schiebt oder zieht, die sich vom Behälter aus nach oben erstreckt und in Fig. 3 zu erkennen ist.

Die Klappe 10, die im Sinn des Pfeiles 11 -Fig. 2- hin und her bewegbar ist, ist entweder ganz aus elastischem Material hergestellt, oder zumindest an ihren den Schlitz in der geschlossenen Stellung überdeckenden Ende mit einer elastischen Lippe 12 versehen, die sich unter Vorspannung gegen den Außenbereich der Wandung 3a und gegen den Schlitz 4 drückt und so für einen einwandfreien Abschluss oder für eine korrekte Begrenzung der Schlitzbreite sorgt. Sie wird gegen die in Drehrichtung 15 der Welle 6 über den Schlitz, und gegebenenfalls auch über dessen Bereich geschoben, der mit den Zähnen 13 versehen ist. Hierdurch wird auch die Einstellung sehr geringer Streumengen möglich, die nur durch die Zwischenräume 14 austreten kann. Auch feinkörniges Material lässt sich daher einwandfrei dosieren.

Die Rippen 7 können über ihre Länge entweder geradlinig durchgehen, d. h. dass ihre Außenkanten jeweils gleichen Abstand zu der Achse 5 aufweisen. Möglich ist es aber auch, dass die radial außen liegenden Ränder der Rippen zu den Wellenenden hin näher zur Achse 5 liegen, sodass die Rippen über ihre Länge eine gebogene Form aufweisen, wobei dann passend dazu auch die Behälterwand 3a in der Richtung der Achse 5 bombiert wird, um die Rippen an der Behälterwand anliegen zu lassen. Bei einer solchen Ausführungsform kann die Streumenge zu den Rädern hin verringert werden. Dies hat zur Folge, dass beim anschließenden Abfahren einer weiteren Streubahn die angrenzenden Bereiche der Streubahnen überlappt werden können, ohne dass dort die doppelte Streumenge ausgebracht wird. Einen ähnlichen Effekt kann man auch erzielen, wenn die Rippen an ihren äußeren Enden geradlinig verlaufen, die Zähne 13 in den zu den Rädern 2 hingelegenen Endbereichen des Schlitzes 4 aber größer ausgebildet sind, sodass die Schlitzbreite dort bei vorgegebener Stellung der Klappe 10, geringer wird. In beiden Fällen muss dafür gesorgt werden, dass die Ausgestaltung symmetrisch zur Mitte der Welle 6 erfolgt, was bedeutet, dass bei gebogenen Rippen eine symmetrische Rippenanordnung mit einer entsprechenden Bombierung der Behälterwand 3 erforderlich ist.

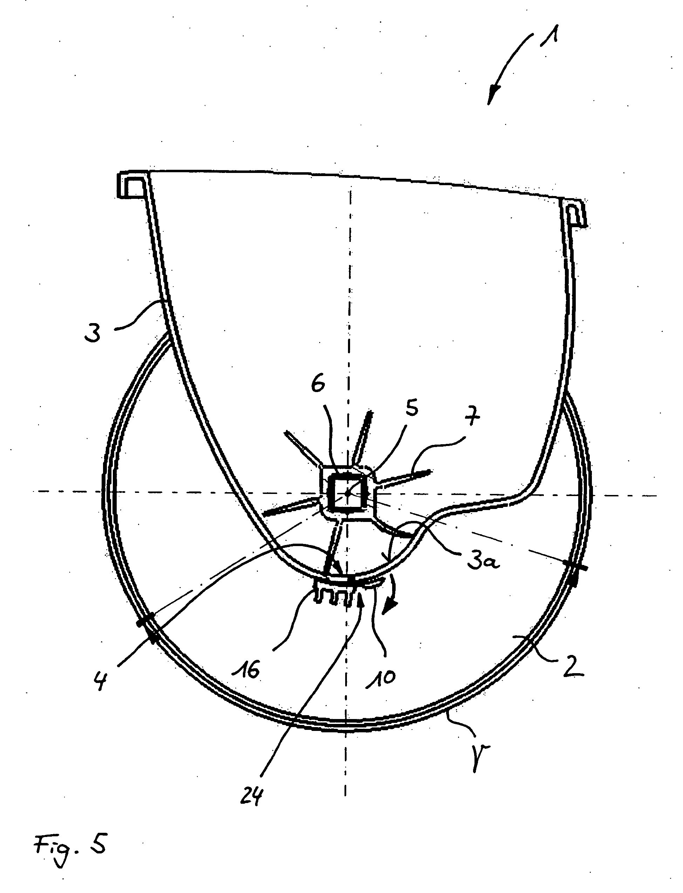

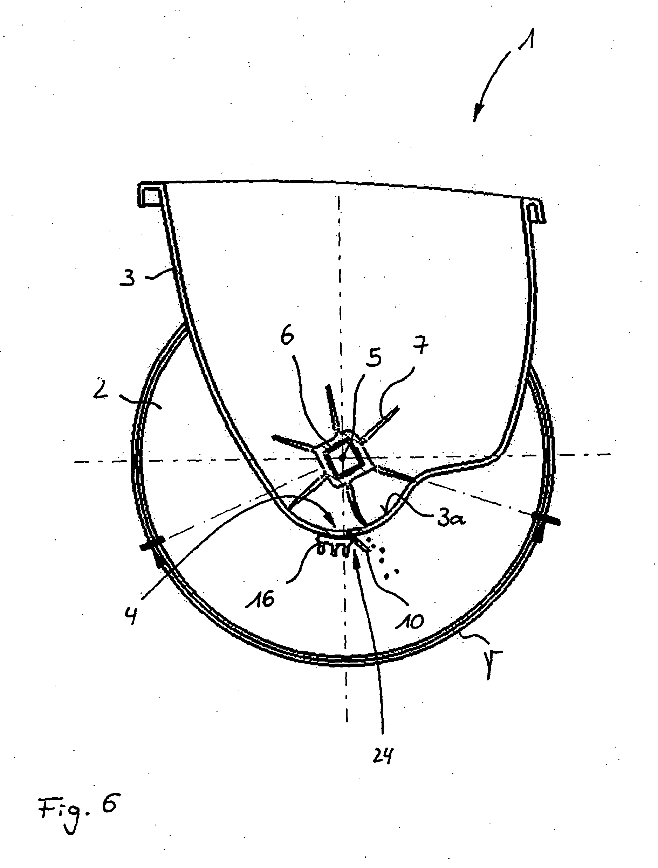

Bei der Ausführungsform der Erfindung gemäß den Figuren 5 und 6 ist eine exzentrische Anordnung der Welle 6 gegenüber einer nicht dargestellten, parallel zur Welle 6 verlaufenden Symmetrieachse der Behälterwand 3a vorgesehen. Durch diese exzentrische Anordnung wird ein ungleichmäßiger radialer Abstand zwischen der Welle 6 und der Behälterwand 3a verwirklicht, der über die Rotationsbewegung der Welle zu einer veränderlichen elastischen Deformation der Rippen 7 durch den Kontakt mit der Behälterwand 3a führt. Die variierende Deformation der Rippen 7 kann den Fig. 5 und 6 entnommen werden, in denen eine über die im Uhrzeigersinn dargestellte Rotationsbewegung abnehmende Deformation der Rippen 7 dargestellt ist. Ein Berührwinkel γ zwischen den Rippen 7 und der Behälterwand 3a beträgt ca. 135 Grad. Bei Überstreichen dieses Berührwinkels γ werden die Rippen zunächst stärker elastisch deformiert, wobei ein Deformationsmaximum im Bereich des Schlitzes 4 vorgesehen sein kann, um eine besonders vorteilhafte Förderung des Streuguts zu verwirklichen. Anschließend lässt die Deformation der Rippen wieder nach.

Während ein der Klappe 10 zugeordneter, über ein Filmscharnier 24 angelenkter, im Wesentlichen formstabiler Endbereich in der Darstellung der Fig. 5 den Schlitz 4 federelastisch verschließt, wird gemäß der Fig. 6 durch die Bewegung der Räder 2 und die dadurch hervorgerufene Förderbewegung der Rippen 7 das Streumaterial mit einem Förderdruck beaufschlagt, der zu einem Verschwenken des Endbereichs der Klappe 10 um das Filmscharnier 24 und damit zur Öffnung des Schlitzes 4 führt. Dadurch kann das Streumittel aus dem Behälter 3 auf einen nicht dargestellten Untergrund aufgestreut werden. Sobald der Förderdruck auf das Streumittel einen konstruktiv vorgebbaren Wert unterschreitet, ermöglicht eine durch die elastische Auslenkung des Endbereichs um das Filmscharnier hervorgerufene Rückstellkraft ein Verschließen des Schlitzes 4, so dass kein weiteres Streumittel mehr austritt. Dies ist insbesondere dann der Fall, wenn das Streugerät nicht mehr weiter bewegt wird oder wenn eine Bewegung des Streugeräts in Freilaufrichtung eines nicht dargestellten Freilaufs erfolgt.

Bei einer nicht dargestellten Ausführungsform der Erfindung ist vorgesehen, die Klappe mittels eines am Behälter oder an der Stange angebrachten Betätigungsgriffs zu verstellen. Zu diesem Zweck kann ein Bowdenzug oder ein Hebelgestänge vorgesehen sein, das eine Kraftübertragung zwischen dem Betätigungsgriff und der Klappe ermöglicht, um auch während des Betriebs des Streuwagens eine bequeme Veränderung der Einstellung der Klappe vornehmen zu können.

Bei einer weiteren nicht dargestellten Ausführungsform der Erfindung ist ein verstellbarer Anschlag für die Klappe vorgesehen, der eine maximale und/oder minimale Öffnungsweite der Klappe begrenzen kann und somit sicherstellt, dass nach einer Veränderung der Klappenstellung eine zuvor eingenommene Stellung der Klappe ohne Justagearbeiten wieder eingenommen werden kann. Dies ist insbesondere bei einer Begrenzung der maximalen Öffnungsweite der Klappe von Vorteil, da nach einem Verschließen der Klappe, beispielsweise bei Überfahren eines nicht mit Streugut zu versehenden Bereiches, eine erneute Öffnung der Klappe auf eine voreingestellte, maximale Öffnungsweite in einfacher Weise verwirklicht werden kann.

## Patentansprüche

1. Streugerät mit einem Behälter (1) für das Streugut, der in seinem unteren Bereich mit einem Schlitz (4) als Auslass zur Streugutabgabe, oberhalb dieses Schlitzes mit einer drehbaren Welle (6) mit einer parallel zum Schlitz verlaufenden Achse (5), sowie mit radial abragenden Rippen (7) oder dergleichen und unterhalb des Schlitzes mit einer Klappe (10) zur Einstellung der Abgabemenge versehen ist, wobei
die Behälterwand (3a) im Bereich der Auslassöffnungen (4) den von den rotierenden Wellenteilen gebildeten Zylinderraum umschließt und **dadurch gekennzeichnet, dass** eine Längskante (4a) des Schlitzes (4) mit sich in Drehrichtung (15) der Welle (6) erweiternden Öffnungen (14) versehen ist.

2. Streugerät nach Anspruch 1, **dadurch gekennzeichnet, dass** die Öffnungen an der Längskante (4a) des Schlitzes (4) als Zwischenräume (14) einer Reihe von Zähnen (13) ausgebildet sind

3. Streugerät nach Anspruch 1, **dadurch gekennzeichnet, dass** die Rippen (7) oder dergleichen gleichmäßig über den Umfang der Welle (6) verteilt sind und ihre Anzahl so gewählt ist, dass immer mindestens eine Rippe oder dergleichen an den zu beiden Seiten des Schlitzes (4) liegenden Behälterwänden (3a) anliegt.

4. Streugerät nach Anspruch 1, **dadurch gekennzeichnet, dass** die Behälterwand (3a) den von den rotierenden Wellenteilen gebildeten Zylinderraum zumindest über einen Winkelbereich (α) von 90° umschließt.

5. Streugerät nach Anspruch 1, **dadurch gekennzeichnet, dass** die Klappe (10) um die Achse (5) der Welle (6) schwenkbar und der Außenkontur des Behälters im Bereich des Schlitzes (4) angepasst ist.

6. Streugerät nach Anspruch 5, **dadurch gekennzeichnet, dass** die Klappe (10) elastisch ausgebildet, oder zumindest an ihrem den Schlitz (4) in der geschlossenen Stellung überdeckendem Ende mit einer elastischen Lippe (12) versehen ist.

7. Streugerät nach Anspruch 6, **dadurch gekennzeichnet, dass** die Lippe (12) beziehungsweise die Klappe (10) unter Vorspannung an der Behälterwand (10) anliegt.

8. Streugerät nach einem der vorhergehenden Ansprüche, **dadurch gekennzeichnet, dass** die Klappe (10) einen im Wesentlichen formstabilen, schwenkbeweglich, insbesondere mittels eines Filmscharniers (24), angelenkten Endbereich aufweist.

9. Streugerät nach Anspruch 1, **dadurch gekennzeichnet, dass** die Außenränder der Rippen (7) in Richtung der Achse (5) der Welle (6) gleichen Abstand von dieser aufweisen oder zu den Wellenenden hin näher zur Achse (5) liegen.

10. Streugerät nach Anspruch 9, **dadurch gekennzeichnet, dass** die Außenränder der Rippen (7) symmetrisch zur Mitte der Welle (6) gebogen sind

11. Streugerät nach Anspruch 1, **dadurch gekennzeichnet, dass** die Rippen (7) oder zumindest deren radial äußere Bereich elastisch nachgiebig ausgebildet sind, und an der Behälterwand (3a) anliegen.

12. Streugerät nach Anspruch 1, **dadurch gekennzeichnet, dass** die Welle (6) aus einem drehfest mit Rädern (2) verbundenen Trägerrohr (8) besteht, das am Behälter (1) gelagert ist, und mit dem Rippen (7) bestückt ist.

13. Streugerät nach einem der Ansprüche 2 bis 12, **dadurch gekennzeichnet, dass** die Zähne (13) an der Längskante (4a) des Schlitzes (4) einen Zahnwinkel (β) von zumindest 30 Grad, bevorzugt von 45 Grad, besonders bevorzugt von maximal 60 Grad, aufweisen.

14. Streugerät nach einem der Ansprüche 2 bis 13, **dadurch gekennzeichnet, dass** die Zähne (13) an der Längskante (4a) des Schlitzes (4) mit einer Zahnfußbreite (22) gestaltet sind, die zumindest einem 0,6-fachen, insbesondere zumindest einem 0,75-fachen, einer Zahnteilung (21) entspricht.

15. Streugerät nach einem der vorhergehenden Ansprüche, **dadurch gekennzeichnet, dass** die Welle (6) als Trägerrohr (8) ausgeführt ist, das am Behälter (1) gelagert und mit Rippen (7) bestückt ist, und dass eine drehbewegliche Ankopplung der Welle (6) an Rädern (2) mittels einer Freilaufeinrichtung vorgesehen ist.

16. Streugerät nach einem der vorhergehenden Ansprüche, **dadurch gekennzeichnet, dass** der von den rotierenden Wellenteilen gebildeten Zylinderraum im Bereich der Auslassöffnungen (4) exzentrisch zur Behälterwand (3a) angeordnet ist.

## Claims

1. Spreading device having a grit container (1) which in its lower region has a slot (4) as an outlet for dispensing the grit, above this slot has a rotatable shaft (6) having an axis (5) parallel with the slot and also having radially protruding ribs (7) or the like, and below the slot has a flap (10) for setting the amount dispensed, wherein the container wall (3a) encloses the cylinder space formed by the rotating shaft parts in the region of the outlet openings (4), and **characterized in that** a longitudinal edge (4a) of the slot (4) is provided with openings (14) that widen in the direction of rotation (15) of the shaft (6).

2. Spreading device according to Claim 1, **characterized in that** the openings on the longitudinal edge (4a) of the slot (4) are formed as intermediate spaces (14) in a row of teeth (13).

3. Spreading device according to Claim 1, **characterized in that** the ribs (7) or the like are distributed uniformly over the circumference of the shaft (6) and the number of thereof is selected such that there is always at least one rib or the like bearing against the container walls (3a) lying on both sides of the slot (4).

4. Spreading device according to Claim 1, **characterized in that** the container wall (3a) encloses the cylinder space formed by the rotating shaft parts at least over an angular range (α) of 90°.

5. Spreading device according to Claim 1, **characterized in that** the flap (10) is able to pivot about the axis (5) of the shaft (6) and is matched to the outer contour of the container in the region of the slot (4).

6. Spreading device according to Claim 5, **characterized in that** the flap (10) is formed to be resilient, or is provided with a resilient lip (12) at least at its end covering the slot (4) in the closed position.

7. Spreading device according to Claim 6, **characterized in that** the lip (12) or the flap (10) bears against the container wall (10) under a preload.

8. Spreading device according to one of the preceding claims, **characterized in that** the flap (10) has an end region which is substantially dimensionally stable, pivotable and hinged, in particular by means of a film hinge (24).

9. Spreading device according to Claim 1, **characterized in that** the outer edges of the ribs (7) are equally spaced from the axis (5) of the shaft (6) in the direction thereof or lie closer to the axis (5) towards the ends of the shaft.

10. Spreading device according to Claim 9, **characterized in that** the outer edges of the ribs (7) are bent symmetrically with respect to the middle of the shaft (6).

11. Spreading device according to Claim 1, **characterized in that** the ribs (7), or at least the radially outer region thereof, are formed in a resiliently flexible manner and bear against the container wall (3a).

12. Spreading device according to Claim 1, **characterized in that** the shaft (6) consists of a support tube (8) which is connected in a rotationally fixed manner to wheels (2), is mounted on the container (1) and is equipped with the ribs (7).

13. Spreading device according to one of Claims 2 to 12, **characterized in that** the teeth (13) on the longitudinal edge (4a) of the slot (4) have a tooth angle (β) of at least 30 degrees, preferably of 45 degrees, particularly preferably of a maximum of 60 degrees.

14. Spreading device according to one of Claims 2 to 13, **characterized in that** the teeth (13) on the longitudinal edge (4a) of the slot (4) are configured with a tooth base width (22) corresponding to at least 0.6 times, in particular at least 0.75 times, a tooth pitch (21).

15. Spreading device according to one of the preceding claims, **characterized in that** the shaft (6) is designed as a support tube (8) which is mounted on the container (1) and equipped with ribs (7), and **in that** the shaft (6) is coupled in a rotational manner to wheels (2) by means of a freewheel apparatus.

16. Spreading device according to one of the preceding claims, **characterized in that** the cylinder space formed by the rotating shaft parts is arranged in the region of the outlet openings (4) eccentrically with respect to the container wall (3a).

## Revendications

1. Dispositif d'épandage avec un réservoir (1) pour le produit à épandre, qui est muni dans sa région inférieure d'une fente (4) formant une sortie pour la distribution du produit à épandre, au-dessus de cette fente d'un arbre rotatif (6) avec un axe (5) s'étendant parallèlement à la fente, ainsi qu'avec des ailettes (7) radialement saillantes ou analogues, et en dessous de la fente d'un clapet (10) pour le réglage du débit de distribution, dans lequel la paroi (3a) du réservoir entoure, dans la région des ouvertures de sortie (4), l'espace cylindrique formé par les parties d'arbre en rotation, et **caractérisé en ce qu'**un long côté (4a) de la fente (4) est muni d'ouvertures (14) s'élargissant dans le sens de rotation (15) de l'arbre (6).

2. Dispositif d'épandage selon la revendication 1, **caractérisé en ce que** les ouvertures sur le long côté (4a) de la fente (4) sont formées par des espaces intermédiaires (14) d'une rangée de dents (13).

3. Dispositif d'épandage selon la revendication 1, **caractérisé en ce que** les ailettes (7) ou analogues sont réparties uniformément sur la périphérie de l'arbre (6) et leur nombre est choisi de telle manière qu'il y ait toujours au moins une ailette ou analogue appliquée sur les parois (3a) du réservoir situées de part et d'autre de la fente (4).

4. Dispositif d'épandage selon la revendication 1, **caractérisé en ce que** la paroi (3a) du réservoir entoure l'espace cylindrique formé par les parties d'arbre en rotation au moins sur une plage angulaire (α) de 90°.

5. Dispositif d'épandage selon la revendication 1, **caractérisé en ce que** le clapet (10) est apte à pivoter autour de l'axe (5) de l'arbre (6) et est adapté au contour extérieur du réservoir dans la région de la fente (4).

6. Dispositif d'épandage selon la revendication 5, **caractérisé en ce que** le clapet (10) est réalisé sous forme élastique, ou est muni d'une lèvre élastique (12) au moins à son extrémité recouvrant la fente (4) en position fermée.

7. Dispositif d'épandage selon la revendication 6, **caractérisé en ce que** la lèvre (12) ou le clapet (10) est appliqué avec une précontrainte sur la paroi (3a) du réservoir.

8. Dispositif d'épandage selon l'une quelconque des revendications précédentes, **caractérisé en ce que** le clapet (10) présente une région d'extrémité de forme essentiellement stable, articulée de façon apte à pivoter, en particulier au moyen d'une charnière pelliculaire (24).

9. Dispositif d'épandage selon la revendication 1, **caractérisé en ce que** les bords extérieurs des ailettes (7) présentent en direction de l'axe (5) de l'arbre (6) la même distance par rapport à celui-ci ou sont situés plus près de l'axe (5) vers les extrémités de l'arbre.

10. Dispositif d'épandage selon la revendication 9, **caractérisé en ce que** les bords extérieurs des ailettes (7) sont courbés symétriquement vers le centre de l'arbre (6).

11. Dispositif d'épandage selon la revendication 1, **caractérisé en ce que** les ailettes (7) ou au moins leur région radialement extérieure sont réalisées sous forme déformable élastiquement, et sont appliquées sur la paroi (3a) du réservoir.

12. Dispositif d'épandage selon la revendication 1, **caractérisé en ce que** l'arbre (6) se compose d'un tube de support (8), solidaire en rotation de roues (2), qui est monté sur le réservoir (1) et qui est garni des ailettes (7).

13. Dispositif d'épandage selon l'une quelconque des revendications 2 à 12, **caractérisé en ce que** les dents (13) sur le long côté (4a) de la fente (4) présentent un angle de dent (β) d'au moins 30 degrés, de préférence de 45 degrés, et de préférence encore de 60 degrés au maximum.

14. Dispositif d'épandage selon l'une quelconque des revendications 2 à 13, **caractérisé en ce que** les dents (13) sur le long côté (4a) de la fente (4) sont réalisées avec une largeur du pied de dent (22) qui correspond au moins à 0,6 fois, en particulier au moins à 0,75 fois, un pas (21) des dents.

15. Dispositif d'épandage selon l'une quelconque des revendications précédentes, **caractérisé en ce que** l'arbre (6) est réalisé sous la forme d'un tube de support (8), qui est monté sur le réservoir (1) et qui est garni d'ailettes (7), et **en ce qu'**il est prévu un couplage rotatif de l'arbre (6) sur les roues (2) au moyen d'un système de roue libre.

16. Dispositif d'épandage selon l'une quelconque des revendications précédentes, **caractérisé en ce que** l'espace cylindrique formé par les parties d'arbre en rotation est disposé dans la région des ouvertures de sortie (4), en position excentrique par rapport à la paroi (3a) du réservoir.
